# EUROPEAN PATENT APPLICATION

(11) **EP 2 184 336 A1**
(43) Date of publication of application: **12.05.2010**
(21) Application number: 10152787.7
(22) Date of filing: 27.11.2006
(51) Int. Cl.: C10L 9/08, C10B 57/10, F23C 9/00, F23K 1/00, F23L 7/00, F26B 3/02, C10L 5/00

(54) **Coal upgrading process utilizing carbon dioxide**

(30) Priority: 29.11.2005 US 740607 P; 21.11.2006 US 562018
(62) Divisional of application: 06831597.7
(71) Applicant: L'Air Liquide Société Anonyme pour l'Etude et l'Exploitation des Procédés Georges Claude, 75007 Paris (FR)
(72) Inventor: Varagani, Rajani K., Illinois, IL 60148 (US); Pranda, Pavol, Illinois, IL 60532 (US)
(74) Representative: Conan, Philippe Claude

(57) **Abstract**

A process of upgrading coal with carbon dioxide, comprising the steps of:
providing a carbon dioxide-containing fluid having a carbon dioxide concentration greater than that of air;
allowing the carbon dioxide-containing fluid to contact coal in a coal upgrading apparatus for a period of time, wherein the coal is not in a water slurry;
allowing the carbon dioxide-containing fluid to be vented from the coal upgrading apparatus thereby removing at least some non-polar constituents from the coal.

## Description

Coal, when mined, comes with lot of impurities. The process of coal upgrading at the mine has been practiced for a long time, mainly to remove the moisture and other easily removable impurities. It was found that steam and certain inert gases were used before for this process. This process is not practiced all the time because of unavailability of the ingredients and economical reasons.

In terms of prior art, documents US-A-4,176,011 and GB-A-1 457 353 teach a coke oven processes where coal is contacted with a mixture of carbon dioxide, nitrogen and other compounds.

US 2005/241217 A1 discloses a coal upgrading method comprising directly contacting the coal with superheated steam.

US 2004/261671 A1 discloses a coal combusting process wherein carbon dioxide is captured in flue gas and used as a fluidizing gas for the coal.

The present invention proposes an innovative process to upgrade/clean coal prior to its use. Upgrading the coal refers to reducing various impurities that are present in mined or raw coal to make the coal cleaner, and also to increase the energy content per unit weight of the coal. The proposed process cleans or upgrades the coal using Carbon Dioxide (CO₂). Combusting upgraded coal results in lower environmental pollutant emissions and increased combustion efficiency. Some coals that cannot be combusted in raw condition can be made possible to combust with the proposed upgrading process.

Purifying the flue gas obtained from combustion of coal is often very expensive. Any effort to purify the coal prior to the combustion can result in significant savings. Also, some lower rank coals that cannot be combusted in typical/traditional combustors can be made possible to combust with the proposed upgrading process.

For a further understanding of the nature and objects of the present invention, reference should be made to the following detailed description, taken in conjunction with the accompanying drawings.

The disclosed processes are directed to upgrading coal with carbon dioxide, including the following steps. A carbon dioxide-containing fluid having a carbon dioxide concentration greater than that of air is provided. The carbon dioxide-containing fluid to contact coal in a coal upgrading apparatus for a period of time, wherein the coal is not in a water slurry. The carbon dioxide-containing fluid is allowed to be vented from the coal upgrading apparatus thereby removing at least some non-polar constituents from the coal.

The disclosed processes can also include one or more of the following aspects.
- collecting some of the flue gas from the combustion chamber before said drying, purifying, and compressing step is performed and combining the collected flue gas with the stream oxygen-enriched gas being introduced to the combustion chamber
- allowing the carbon dioxide-rich fluid to exit the coal upgrading apparatus and into a first cleaning unit, wherein contact between the carbon dioxide-rich fluid and the coal in the coal upgrading apparatus results in solvation of some non-polar constituents of the coal into the carbon dioxide-rich fluid; and separating out some of the carbon dioxide from the combined carbon dioxide-rich fluid and the non-polar constituents at the first cleaning unit; and introducing the separated out carbon dioxide back into the coal upgrading apparatus; and removing at least some of a volatile component content of the non-polar constituents from non-polar constituents; and introducing the separated volatile content into the combustion chamber.
- during the step of allowing the carbon dioxide-rich fluid to contact, the coal upgrading apparatus is sealed and has a pressure greater than ambient.
- the carbon dioxide-rich fluid is a liquid.
- the carbon dioxide-rich fluid is a gas.
- the carbon dioxide-rich fluid has a pressure of no less than 1,000 psia.
- the oxygen-enriched gas has an oxygen concentration in a range of from 21 % to 99.5%.
- the coal is not in a slurry with water.
- the combustion chamber is part of a boiler.
   The disclosed integrated system can include one or more of the following aspects.
- The integrated system also includes an oxidant line adapted and configured to facilitate fluid communication between the oxygen-enriched gas stream outlet and the combustion chamber; and a flue gas recycle line fluidly communicating with the drying, purifying, and compressing device and the oxidant line; and a mixing element disposed at a location wherein the flue gas recycle line and the oxidant line fluidly communicate, the mixing element adapted and configured to mix flue gas received from the flue gas recycle line with oxidant from said oxygen-enriched gas stream outlet.
- The integrated system also includes a first cleaning unit fluidly communicating with the coal upgrading apparatus via a carbon dioxide vent line and via the carbon dioxide-rich fluid feed line, said first cleaning unit also fluidly communicating with the combustion chamber via a volatiles line, wherein the first cleaning unit is configured and adapted to: receive carbon dioxide-rich fluid from said coal upgrading apparatus containing a mixture of carbon dioxide and non-polar constituents therefrom; and separate at least some of carbon dioxide from the mixture of carbon dioxide and non-polar constituents; and direct the separated carbon dioxide to said coal upgrading apparatus via said carbon dioxide-rich fluid feed line; and separate out least some of a volatile component content of the non-polar constituents from the non-polar constituents; and direct the separated volatile component content to said combustion chamber via said volatiles line.

The method does not need be integrated with a combustion process/system nor requires treatment by both carbon dioxide-rich fluid and nitrogen-enriched air. Indeed, coal may be upgraded by carbon dioxide-rich fluid alone apart from a combustion process/system.

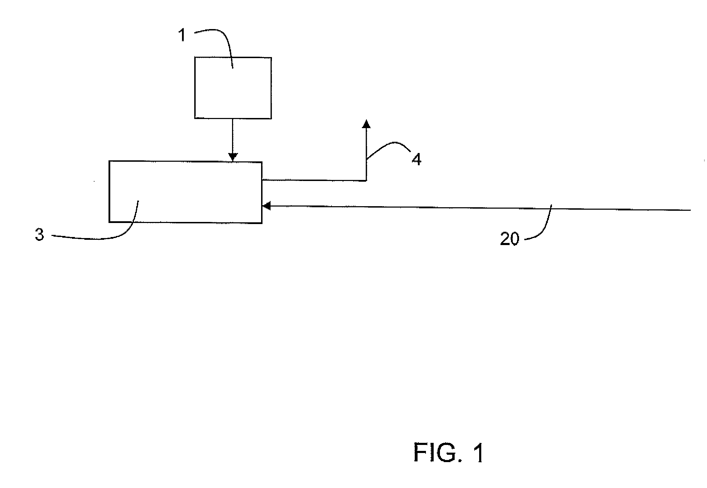

As best illustrated in Fig. 1, coal may be upgraded by carbon dioxide without nitrogen. Carbon dioxide-rich fluid from any source is directed to coal upgrading apparatus **3** via carbon dioxide-rich fluid feed **20.** In this case, the carbon dioxide-rich fluid need not be derived from flue gas. During treatment by the carbon dioxide-rich fluid, the coal upgrading apparatus **3** is pressurized with the carbon dioxide-rich fluid from carbon dioxide-rich fluid feed line **20** and then sealed. The pressurized carbon dioxide-rich fluid is then allowed to contact the coal for a desired period of time in order to solvate non-polar constituents in the coal. At relatively higher temperatures and pressures, carbon dioxide exhibits excellent solvent properties. The carbon dioxide-rich fluid may be introduced as a gas or a liquid. While the carbon dioxide-rich fluid will often include multiple components, including carbon dioxide, oxygen, nitrogen, and NOx, the carbon dioxide-rich fluid may potentially also be in a supercritical fluid state. One skilled in the art will appreciate that the pressure and temperature of the carbon dioxide-rich fluid may be selected based upon the type of coal and impurities targeted. Preferably, the carbon dioxide-rich fluid has a pressure of no less than 1000 psia. After treatment, the coal upgrading apparatus is vented via a carbon dioxide vent line **4.**

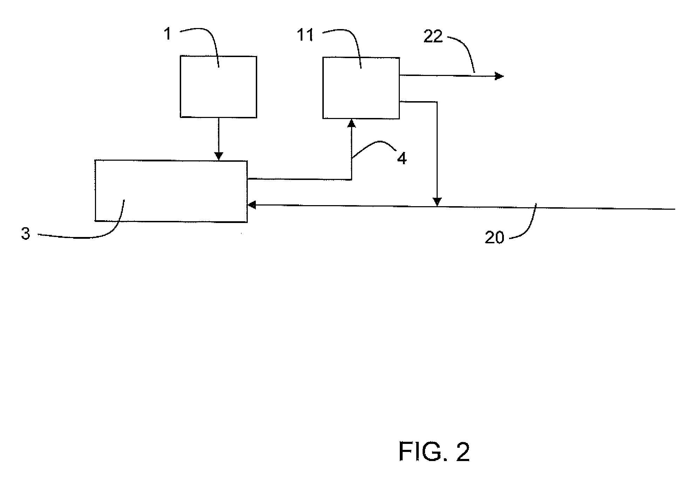

As best shown in Fig. 2, the embodiment of Fig. 1 may include carbon dioxide cleaning. In this embodiment, carbon dioxide containing non-polar constituents from the coal exits coal upgrading apparatus **3** via carbon dioxide vent line **4** and is introduced to first cleaning unit **11.** At least some of the carbon dioxide is then separated from the non-polar constituents in a known manner. The separated carbon dioxide is then either directed to carbon dioxide-rich fluid feed line **20** for use or to vent **22** for use and/or storage.

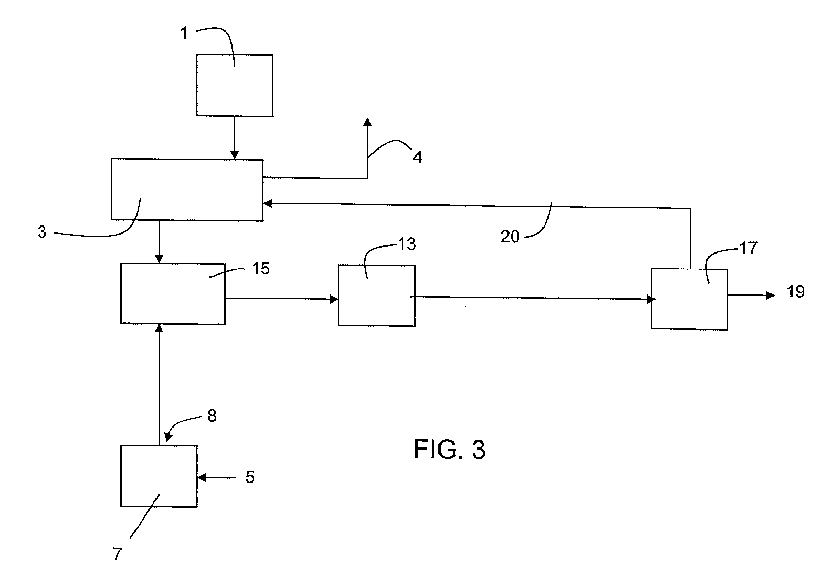

As best illustrated in Fig. 3, the embodiment of Fig. 1 may be integrated with a combustion process/system. The integrated nature of the coal upgrading and combustion of coal and oxygen-enriched air lowers both operating and capital costs. Air feed **5** is separated into oxygen-enriched air and nitrogen-enriched air at air separation unit (ASU) **7.** The oxygen-enriched air leaves oxygen-enriched air outlet **8** and is directed by oxidant line **10** to combustion chamber **15.** The nitrogen-enriched air leaves nitrogen-enriched air outlet **6** and is directed to heating device **14** and then to coal upgrading apparatus **3.** Typical oxygen and nitrogen concentrations are in a range of from 80 % to 99.5 % by volume. Coal from coal supply **1** is also caused to be placed into coal upgrading apparatus **3.**

Coal and oxygen-enriched air are combusted in combustion chamber **15** thereby producing flue gas. Optionally, air may also be fed to the combustion chamber. In this case, the total oxygen concentration of the combined oxygen-enriched air and air entering the combustion chamber **15** is 21% or higher. The system and process is particularly applicable to a combustion chamber **15** that is a boiler. The flue gas is directed to optional flue gas cleaning unit **13** to remove impurities in a known way. The non-cleaned flue gas or cleaned flue gas (in the case where unit **13** is selected) is then directed to flue gas drying, purifying, and compressing device **17.** Cleaned, dried, purified, and compressed flue gas is then directed to coal upgrading apparatus **3** via carbon dioxide-rich fluid feed line **20.** Optionally, cleaned, dried, purified, and compressed flue gas may also be directed out of the drying, purifying, and compressing device to a use or storage device **19.**

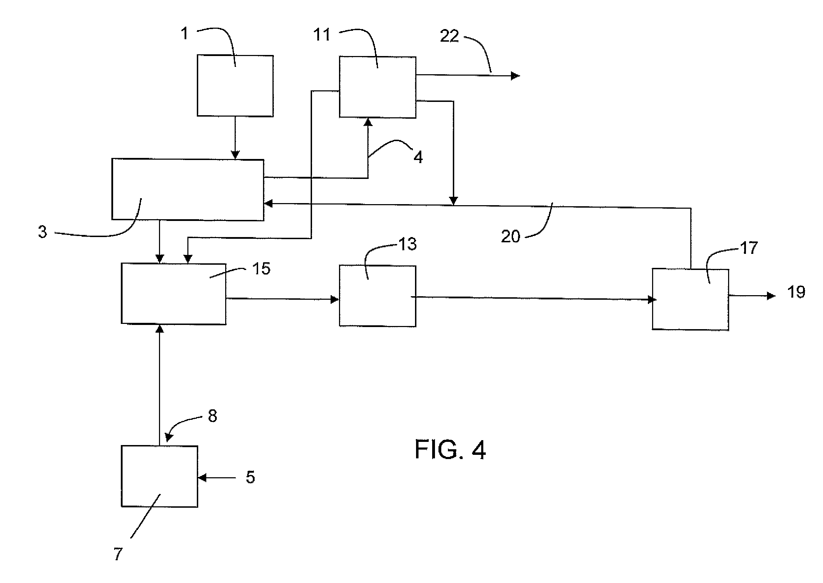

As best shown in Figure 4, the embodiment of Figure 3 may also include carbon dioxide cleaning. In this embodiment, carbon dioxide containing non-polar constituents from the coal exits coal upgrading apparatus **3** via carbon dioxide vent line **4** and is introduced to first cleaning unit **11.** At least some of the carbon dioxide is then separated from the non-polar constituents in a known manner. The separated carbon dioxide is then directed to carbon dioxide-rich fluid feed line **20** for reentry into coal upgrading apparatus **3.** At least some of the volatile content of the non-polar constituents is then separated out and directed to the combustion chamber **15** via volatiles line **18** where they are combusted with the oxygen-enriched air and coal. The remainder of the carbon dioxide-depleted and volatile-depleted content, such as heavy metals, may be vented via vent **22.**

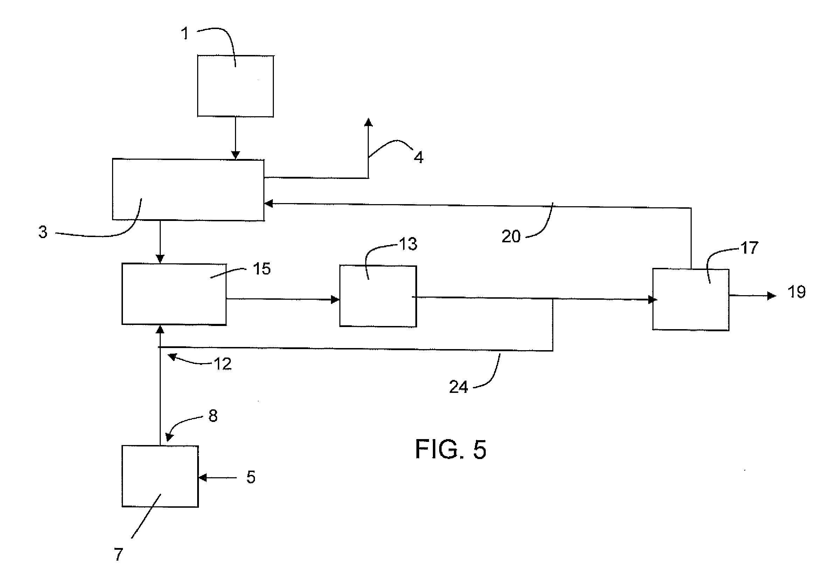

As best shown in Figure 5, the embodiment of Figure 3 may also include flue gas recycling. After the flue gas is cleaned at optional flue gas cleaning unit **13,** a portion the cleaned flue gas then may be directed by flue gas recycle line **24** to mixer **12** where it is mixed with oxygen-enriched gas and introduced to combustion chamber **15** via oxidant line **10.**

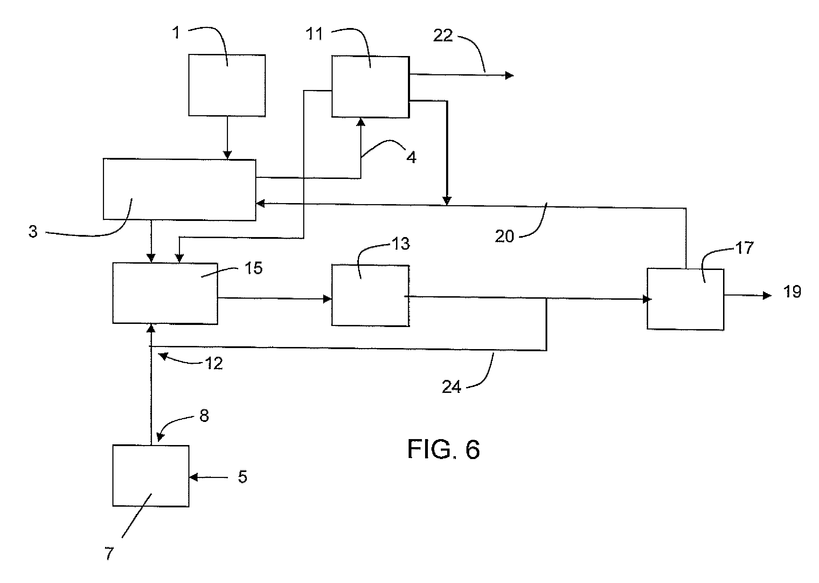

As best illustrated in Figure 6, the embodiment of Figure 4 may also include flue gas recycling. After the flue gas is cleaned at optional flue gas cleaning unit **13,** a portion the cleaned flue gas then may be directed by flue gas recycle line **24** to mixer **12** where it is mixed with oxygen-enriched gas and introduced to combustion chamber **15** via oxidant line **10.**

## Claims

1. A process of upgrading coal with carbon dioxide, comprising the steps of:
providing a carbon dioxide-containing fluid having a carbon dioxide concentration greater than that of air;
allowing the carbon dioxide-containing fluid to contact coal in a coal upgrading apparatus for a period of time, wherein the coal is not in a water slurry;
allowing the carbon dioxide-containing fluid to be vented from the coal upgrading apparatus thereby removing at least some non-polar constituents from the coal.

2. The process of claim 1, wherein the coal upgrading apparatus is at a pressure greater than ambient and is sealed during contact of the carbon dioxide-containing fluid and coal.

3. The process of one of claims 1 or 2, wherein the coal is not in a slurry with water.

4. The process of one of claims 1 to 3, further comprising the steps of:
separating air into streams of oxygen-enriched air and nitrogen-enriched air;
introducing the stream of oxygen-enriched air and the coal from the coal upgrading apparatus to a combustion chamber;
combusting the coal and oxygen-enriched air in the combustion chamber thereby producing flue gas;
drying, purifying, and compressing the flue gas to produce the carbon dioxide-containing fluid.

5. The process of one of claims 1 to 4, further comprising the steps of:
collecting some of the flue gas from the combustion chamber before said drying, purifying, and compressing step is performed; and
combining the collected flue gas with the stream oxygen-enriched gas being introduced to the combustion chamber.

6. The process of claim 5, further comprising the steps of:
allowing the carbon dioxide-containing fluid to exit the coal upgrading apparatus and into a first cleaning unit, wherein contact between the carbon dioxide-containing fluid and the coal in the coal upgrading apparatus results in dissolution of some non-polar constituents of the coal into the carbon dioxide-containing fluid;
separating out some of the carbon dioxide from the combined carbon dioxide-containing fluid and the non-polar constituents at the first cleaning unit;
introducing the separated out carbon dioxide back into the coal upgrading apparatus;
removing at least some of a volatile component content of the non-polar constituents from non-polar consitutents; and
introducing the separated volatile content into the combustion chamber.

7. The process of one of claims 1 to 6, wherein the carbon dioxide-containing fluid is a liquid.

8. The process of one of claims 1 to 7, wherein the carbon dioxide-containing fluid is a gas.

9. The process of one of claims 1 to 8, wherein the carbon dioxide-containing fluid has a pressure of no less than 1,000 psia.
